# EUROPEAN PATENT SPECIFICATION

(11) **EP 0 842 237 B1**
(45) Date of publication and mention of the grant of the patent: **23.08.2000**
(21) Application number: 97920893.1
(22) Date of filing: 22.05.1997
(51) Int. Cl.: C09K 11/80, H01J 61/44

(54) **LUMINESCENT ALUMINATE**
ALUMINAT-PHOSPHOR
ALUMINATE LUMINESCENT

(30) Priority: 31.05.1996 EP 96201525
(43) Date of publication of application: 20.05.1998
(73) Proprietor: Koninklijke Philips Electronics N.V., 5621 BA Eindhoven (NL)
(72) Inventor: HINTZEN, Hubertus, Theresia, NL-5656 AA Eindhoven (NL); JANSEN, Stephan, Remco, NL-5656 AA Eindhoven (NL); MIGCHELS, Judith, Maria, NL-5656 AA Eindhoven (NL)
(74) Representative: Bosma, Rudolphus Hubertus Antonius
(86) International application number: IB9700576
(87) International publication number: WO9745504

(56) References cited:
- EP-A- 0 082 570

## Description

The invention relates to a luminescent aluminate which is activated by bivalent europium and which has a hexagonal crystal structure corresponding to that of phase 1 β-alumina. The invention also relates to a luminescent screen provided with such a luminescent material and to a low-pressure mercury discharge lamp provided with such a luminescent screen.

Such a luminescent aluminate is known from GB-PS 1,190,520 (PHN 2878). The known aluminates have a hexagonal crystal structure and are indicated in the cited GB-PS with the formula MeAl₁₂O₁₉-Eu, in which Me denotes Ca, Sr and/or Ba. It was found that these aluminates have the structure of (hexagonal) magnetoplumbite when Me is Ca and/or Sr. The barium aluminate on the other hand has the crystal structure of β-alumina (NaAl₁₁O₁₇), which is also hexagonal. Replacement of the Na in β-alumina with Ba is possible, in which case charge compensation is obtained in that, for example, the Al is simultaneously replaced with Mg. BaMgAl₁₀O₁₇ is then obtained, which is an efficient blue-luminescing substance when activated with Eu (see GB-PS 1,452,083). It is also possible to obtain charge compensation in the substitution of Ba for Na in the β-alumina through the formation of Ba vacancies and interstitial oxygen, in which case the crystal structure remains intact. The Ba β-alumina is found to occur in two phases, called phase 1 and phase 2. The phase 1 β-alumina can be obtained in a certain range of aluminum contents and can be represented by the formula BaAl₁₁₊ₚO_{17.5+1.5p}, with 1.8 ≤ p ≤ 3.6. In general, the most suitable form of this phase 1 is written as: BaAl_{13.2}O_{20.8} (p = 2.2).

When Na is replaced with Ba in β-alumina, charge compensation can also be realized through the replacement of oxygen with nitrogen. If all Na is replaced by Ba, the result is BaAl₁₁O₁₆N.

It was found that a continuous series of stable compounds exists between the compounds BaAl₁₁₊ₚO_{17.5+1.5p} and BaAl₁₁O₁₆N, all having the phase 1 β-alumina crystal structure: BaAl₁₁₊ₚ₍₁₋ₓ₎O_{17.5+1.5p(1-x)-1.5x}Nₓ can be formed over a certain range of the nitrogen content, in which 1.8 ≤ p ≤ 3.6 and 0 ≤ x ≤ 1.

The BaMgAl₁₀O₁₇ activated by Eu mentioned above and also referred to as BAM hereinafter is widely used in low-pressure mercury discharge lamps of the three-band type. It is found in practice that the luminous efficacy (lm/W) of such a low-pressure mercury discharge lamp has a comparatively high value. A good lumen maintenance is also found for such lamps. A disadvantage of such lamps is, however, that the color rendering is limited by the position of the average emission wavelength of BAM.

The invention has for its object to provide new efficient blue-luminescing substances. It is envisaged in particular to provide such substances with which it is possible to manufacture low-pressure mercury discharge lamps of the three-band type which have a good luminous efficacy, a good lumen maintenance, and an improved color rendering.

According to the invention, a luminescent aluminate as mentioned in the opening paragraph is for this purpose characterized in that the aluminate comprises nitrogen and complies with the formula

Ba_{1-y}Eu_{y}Al₁₁₊ₚ₍₁₋ₓ₎O_{17.5+1.5p(1-x)-1.5x}Nₓ,

in which
0.01 ≤ y ≤ 0.40
1.8 ≤ p ≤ 3.6
0 < x ≤ 1 ,
and in which the Ba may be partly replaced by Sr and/or Ca and the Al by Ga and/or Sc, in which replacements the Sr and/or Ca and the Ga and/or Sc quantities remain limited such that the phase 1 β-alumina structure remains at least substantially intact.
The statement that the phase 1 β-alumina structure remains at least substantially intact is understood to mean here that at least 50% of the aluminate has this structure.

It was found to be possible to influence the value of the average emission wavelength of the aluminate through the values of x and y. A suitable choice of x and y renders it possible to give the average emission wavelength of the aluminate a value such that the use of this aluminate in a low-pressure mercury discharge lamp of the three-band type results in a lamp with an improved color rendering. If the value of y is chosen to be higher than 0.40, extinction through self-absorption takes place, which causes the quantum efficiency of the aluminate to drop steeply. At the same time, part of the aluminate assumes a magnetoplubite structure. This magnetoplumbite structure does not have good luminescence properties. Good results were obtained with 0.10 ≤ y ≤ 0.20. As was indicated above for the non-activated Ba aluminate, it was found to be possible to form stable (Eu-activated) aluminates with 1.8 ≤ p ≤ 3.6 and 0 < x ≤ 1. Preferably, however, the values of p and x are chosen such that they comply with 2.0 ≤ p ≤ 2.5 and 0.10 ≤ x ≤ 1.0. Good results were found more in particular when the value of p was 2.2. In that case, the aluminate can be written with the formula Ba_{1-y}Eu_{y}Al_{13.2-2.2x}O_{20.8-4.8x}Nₓ, in which 0.10 ≤ y ≤ 0.20 and 0.10 ≤ x ≤ 1.0.

Table I lists a few aluminate compositions with the accompanying emission maxima and average emission wavelengths. The excitation took place by means of radiation having a wavelength of 254 nm.

**Table I**

| Aluminate: | emission maximum (nm): | Average emission wavelength (nm): |
|---|---|---|
| Ba_{0.99}Eu_{0.01}Al_{13.2}O_{20.8} | 442 | 479 |
| Ba_{0.99}Eu_{0.01}Al₁₁O₁₆N | 453 | 474 |
| Ba_{0.9}Eu_{0.1}Al_{11.88}O_{17.92}N_{0.6} | 456 | 489 |
| Ba_{0.85}Eu_{0.15}Al_{11.88}O_{17.92}N_{0.6} | 456 | 493 |
| Ba_{0.9}Eu_{0.1}MgAl₁₀O₁₇ (BAM) | 451 | 460 |

The compositions listed in Table I were prepared through mixing of Eu₂O₃, BaCO₃, AlN, and Al₂O₃ in the desired ratios and heating them for two hours at a temperature of approximately 1973 K. It can be seen that the average emission wavelength depends strongly on the composition of the aluminate. Table II shows the achievable color rendering index Ra,8 and the luminous efficacy of low-pressure mercury discharge lamps operating by the three-band principle in which an aluminate according to the invention is used as the blue-luminescing substance. The color rendering index and luminous efficacy of a low-pressure mercury discharge lamp operating by the three-band principle with BAM as the blue-luminescing substance are also shown for comparison.

**Table II**

| Blue-luminescing substance | Ra,8 | luminous efficacy (lm/W) |
|---|---|---|
| Ba_{0.9}Eu_{0.1}Al_{11.88}O_{17.92}N_{0.6} | 90 | 88 |
| Ba_{0.85}Eu_{0.15}Al_{11.88}O_{17.92}N_{0.6} | 91 | 88 |
| Ba_{0.9}Eu_{0.1}MgAl₁₀O₁₇ (BAM) | 83 | 89 |

It is evident that the lamps in which an aluminate according to the invention is used as the blue-luminescing substance have a luminous efficacy which is comparable to that of a lamp in which BAM is used as a green-luminescing substance. The color rendering of lamps having an aluminate according to the invention, however, is substantially better than that of the lamp with BAM.

It was found in further experiments that the lumen maintenance and short-term luminous decrement of the aluminates according to the invention listed in Table II were both comparable to the lumen maintenance and short-term luminous decrement of BAM.

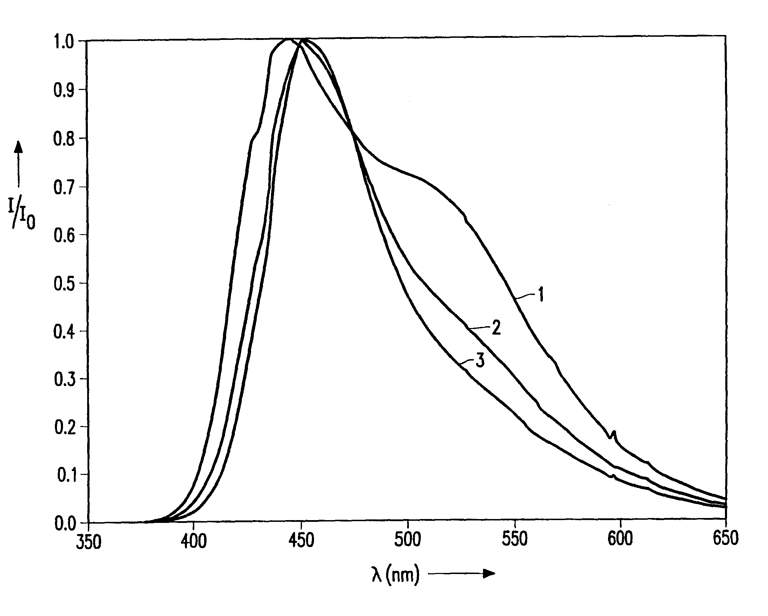

Fig. 1 shows the emission spectra of three aluminates. The wavelength λ of the emitted light is plotted in nm on the horizontal axis of Fig. 1. I/Imax is plotted on the vertical axis of Fig. 1, I being the intensity of the emitted radiation and Imax the intensity of the radiation at the wavelength for which the intensity is a maximum. The curves 1, 2 and 3 represent the emission spectra of Ba_{0.9}Eu_{0.1}Al_{13.2}O_{20.8} Ba_{0.9}Eu_{0.1}Al_{11.88}O_{17.92}N_{0.6}, and Ba_{0.9}Eu_{0.1}Al₁₁O₁₁N, respectively. These substances were excited by means of radiation having a wavelength of 254 nm.

## Claims

1. A luminescent aluminate which is activated by bivalent europium and which has a hexagonal crystal structure corresponding to that of phase 1 β-alumina, characterized in that the aluminate comprises nitrogen and complies with the formula
Ba_{1-y}Eu_{y}Al₁₁₊ₚ₍₁₋ₓ₎O_{17.5+1.5p(1-x)-1.5x}Nₓ,
in which
0.01 ≤ y ≤ 0.40
1.8 ≤ p ≤ 3.6
0 < x ≤ 1 ,
and in which the Ba may be partly replaced by Sr and/or Ca and the Al by Ga and/or Sc, in which replacements the Sr and/or Ca and the Ga and/or Sc quantities remain limited such that the phase 1 β-alumina structure remains at least substantially intact.

2. A luminescent aluminate as claimed in Claim 1, characterized in that
0.10 ≤ y ≤ 0.20.

3. A luminescent aluminate as claimed in Claim 1 or 2, characterized in that
2.0 ≤ p ≤ 2.5 , with preferably p = 2.2.

4. A luminescent aluminate as claimed in Claim 1, 2 or 3, characterized in that
0,10 ≤ x ≤ 1.0.

5. A luminescent aluminate as claimed in Claim 1, 2, 3 or 4, characterized in that the aluminate complies with the formula
Ba_{1-y}Eu_{y}Al_{13.2-2.2x}O_{20.8-4.8x}Nₓ,
in which
0.10 ≤ y ≤ 0.20
0.10 ≤ x ≤ 1.0.

6. A luminescent screen with a carrier provided with a luminescent aluminate as claimed in any one or several of the preceding Claims.

7. A low-pressure mercury discharge lamp provided with a luminescent screen as claimed in Claim 6.

## Patentansprüche

1. Leuchtaluminat, das mit zweiwertigem Europium aktiviert ist und eine hexagonale Kristallstruktur hat, die dem von Phase-1-β-Aluminiumoxid entspricht, dadurch gekennzeichnet, dass das Aluminat Stickstoff umfasst und die Formel
Ba_{1-y}Eu_{y}Al₁₁₊ₚ₍₁₋ₓ₎O_{17,5+1,5p(1-x)-1,5x}Nₓ,
erfüllt, mit
0,01 ≤ y ≤ 0,40
1,8 ≤ p ≤ 3,6
0 < x ≤ 1 ,
und hierbei das Ba teilweise durch Sr und/oder Ca und das Al durch Ga und/oder Sc ersetzt werden kann, wobei bei diesen Ersetzungen die Sr- und/oder Ca- und die Ga- und/oder Sc-Mengen begrenzt bleiben, so dass die Phase-1-β-Aluminiumoxidstruktur zumindest nahezu intakt bleibt.

2. Leuchtaluminat nach Anspruch 1, dadurch gekennzeichnet, dass
0,10 ≤ y ≤ 0,20.

3. Leuchtaluminat nach Anspruch 1 oder 2, dadurch gekennzeichnet, dass
2,0 ≤ p ≤ 2,5 , mit vorzugsweise p = 2,2.

4. Leuchtaluminat nach Anspruch 1, 2 oder 3, dadurch gekennzeichnet, dass
0,10 ≤ x ≤ 1,0.

5. Leuchtaluminat nach Anspruch 1, 2, 3 oder 4, dadurch gekennzeichnet, dass das Aluminat die Formel
Ba_{1-y}Eu_{y}Al_{13,2-2,2x}O_{20,8-4,8x}Nₓ,
erfüllt, mit
0,10 ≤ y ≤ 0,20
0,10 ≤ x ≤ 1,0.

6. Leuchtschirm mit einem mit einem Leuchtaluminat nach einem oder mehreren der vorhergehenden Ansprüche versehenen Träger.

7. Niederdruck-Quecksilberentladungslampe mit einem Leuchtschirm nach Anspruch 6.

## Revendications

1. Aluminate luminescent qui est activé par de l'europium bivalent et qui présente une structure cristalline hexagonale correspondant à celle de la 1 β - alumine de la phase 1, caractérisé en ce que l'alumine contient de l'azote et satisfait à la formule
Ba_{1-y}Eu_{y}Al₁₁₊ₚ₍₁₋ₓ₎O_{17,5+1,5p(1-x)-1,5x}Nₓ,
formule dans laquelle
0,01 ≤ y ≤ 0,40
1,8 ≤ p ≤ 3,6
0 < x ≤ 1,
et dans laquelle Ba peut être remplacé partiellement par Sr et/ou Ca et Al par Ga et/ou Sc, remplacements dans lesquels les quantités de Sr et/ou de Ca et de Ga et/ou de Sc restent limitées de façon que la structure de la 1 - β - alumine de la phase 1 reste au moins pratiquement intacte.

2. Aluminate luminescent selon la revendication 1, caractérisé en ce que
0,10 ≤ y ≤ 0,20.

3. Aluminate luminescent selon la revendication 1 ou 2, caractérisé en ce que
2,0 ≤ p ≤ 2,5, de préférence p = 2,2.

4. Aluminate luminescent selon la revendication 1, 2 ou 3, caractérisé en ce que
0,10 ≤ x ≤ 1,0

5. Aluminate luminescent selon la revendication 1, 2, 3 ou 4, caractérisé en ce que l'aluminate satisfait à la formule
Ba_{1-y}Eu_{y}Al_{13,2-2,2x}O_{20,8-4,8x}Nₓ,
formule dans laquelle
0,10 ≤ y ≤ 0,20
0,10 ≤ x ≤ 1,0.

6. Ecran luminescent muni d'un support muni d'un aluminate luminescent comme revendiqué dans l'une ou plusieurs des revendications précédentes.

7. Lampe à décharge dans la vapeur de mercure à basse pression munie d'un écran luminescent selon la revendication 6.
